# EUROPEAN PATENT SPECIFICATION

(11) **EP 1 817 687 B1**
(45) Date of publication and mention of the grant of the patent: **31.08.2016**
(21) Application number: 05808645.5
(22) Date of filing: 20.10.2005
(51) Int. Cl.: G06F 17/00, G06F 21/10

(54) **APPARATUS AND METHOD FOR SUPPORTING CONTENT EXCHANGE BETWEEN DIFFERENT DRM DOMAINS**
VORRICHTUNG UND VERFAHREN ZUR UNTERSTÜTZUNG DES INHALTSAUSTAUSCHS ZWISCHEN VERSCHIEDENEN DRM-DOMÄNEN
DISPOSITIF ET PROCEDE PERMETTANT L'ECHANGE DE CONTENUS ENTRE DIFFERENTS DOMAINES DRM

(30) Priority: 20.10.2004 KR 20040084181; 22.04.2005 KR 20050033480
(43) Date of publication of application: 15.08.2007
(73) Proprietor: Inka Entworks, Inc, Kangnam-gu, Seoul 135-925 (KR)
(72) Inventor: YOON, Ki Song Expo Apt. 204-503, Jeonmin-dong, Daejeon 305-761 (KR); JEONG, Yeon Jeong, Daejeon 301-832 (KR); HWANG, Seong Oun 2F., 210-74 Shinsung-dong, Daejeon 305-805 (KR); NAM, Do Won Yoodeung Maeul Apt. 106-1502,, Daejeon 301-150 (KR); KIM, Jeong Hyun 103, 162-5 Shinsung-dong, Daejeon 305-805 (KR); PARK, Ji Hyun Chowon Apt. 103-1110, Manyeun-dong, Daejeon 302-740 (KR); JEONG, Sang Won 301, 20 Manyeun-dong, Daejeon 302-834 (KR); KIM, Jun Il Keokdong Apt. 108-1003, Hoicheon-eup, Kyunggi-do 482-050 (KR); AHN, Seong Min 7/4, 1113-19 Hwagok-dong, Seoul 157-010 (KR); KIM, Seong Han Toigye Apt. 363-1903, 18/3,, Gunpo Kyunggi-do 435-050 (KR); JANG, Wan Ho Saetbyul Hanyang Apt., Kyunggi-do 431-050 (KR)
(74) Representative: Betten & Resch
(86) International application number: PCT/KR2005/003494
(87) International publication number: WO 2006/043784

(56) References cited:
- EP-A1- 1 158 416
- EP-A1- 1 416 406
- WO-A1-96/37817
- WO-A2-03/096168
- KR-A- 2002 019 806
- KR-A- 2002 073 035
- KR-A- 2002 083 851
- KR-A- 2004 034 165
- CEPONKUS A ET AL: "XML as an information exchange format between clients and servers", APPLIED XML: A TOOLKIT FOR PROGRAMMERS, XX, XX, 1 January 1999 (1999-01-01), pages 33-37,43, XP002275167,

## Description

### Background Art

### 1. Field of the Invention

The present invention relates to digital rights management (DRM) mechanism and, more particularly, to method and apparatus for exchanging contents between different DRM domains.

### 2. Description of Related Art

In general, audio, video and other contents in different DRM domains, which are provided through various wired, wireless, and broadcasting networks such as the Internet and other wireless communications networks, can only be executed by the corresponding DRM devices. Recently, various DRM devices have come into widespread use. However, since they do not provide interoperability and cannot execute the contents governed by different DRM domains, access to various contents is limited. Even though various devices, such as MP3 players, cellular phones, portable audio/ video (PAV) devices, etc, are used by the same user, it is impossible to exchange contents between the devices each of which uses different DRM devices. Accordingly, the usefulness of the contents would be restricted. Even if a universal DRM device supporting all DRM formats were developed, since conventional DRM devices are not still compatible with various different DRM formats, users demands for access to various contents will not be satisfied.

Thus, there is an urgent need for mechanism for supporting content exchange between different DRM format devices.

### SUMMARY OF THE INVENTION

The present invention is directed to a data structure of neutral- formatted contents that enables contents to be exchanged between different DRM domains.

The present invention is also directed to an apparatus and method for supporting effective content exchange between different DRM format devices by using neutral-formatted contents.

A first aspect of the present invention provides an apparatus for exporting given DRM formatted contents to a target DRM apparatus with a different DRM format. The apparatus comprises means for unpackaging the given DRM formatted contents into clear resources, metadata, and rights expression; means for converting each of the unpackaged clear resources, metadata, and rights expression into its own predefined neutral format, respectively; and means for generating neutral-formatted contents by combining the converted resources, metadata, and rights expression and adding predetermined header information thereto; and means for transmitting the neutral-formatted contents to the target DRM apparatus.

A second aspect of the present invention provides an apparatus for importing predefined neutral-formatted contents in a given DRM domain, comprising extracting means for extracting clear resources, metadata, and rights expression from the predefined neutral-formatted contents; and packaging means for packaging the extracted clear resources, metadata, and rights expression into the given DRM formatted contents, wherein the given DRM formatted contents are executed by various DRM apparatuses in the given DRM domain.

A third aspect of the present invention provides an apparatus for exporting and importing contents. The apparatus comprises means for unpackaging contents in its own DRM format into clear resources, metadata, and rights expression; means for converting each of the unpackaged clear resources, metadata, and rights expression into a predefined neutral format, respectively; and means for generating neutral-formatted contents by combining the converted resources, metadata, and rights expression and adding predetermined header information thereto; means for transmitting the neutral-formatted contents to different DRM domain; means for extracting clear resources, metadata, and rights expression from neutral-formatted contents transmitted from a different DRM domain; and means for packaging the extracted clear resources, metadata, and rights expression into given DRM formatted contents.

A fourth aspect of the present invention provides a method for exporting given DRM formatted contents to a target DRM apparatus with a different DRM format. The method comprises the steps of unpackaging the given DRM formatted contents into clear resources, metadata, and rights expression; converting each of the unpackaged clear resources, metadata, and rights expression into its own predefined neutral format, respectively; and generating neutral-formatted contents by combining the converted resources, metadata, and rights expression and adding predetermined header information thereto; and transmitting the neutral-formatted contents to the target DRM apparatus.

A fifth aspect of the present invention provides a method of importing predetermined neutral-formatted contents in a given DRM domain, comprising the steps of extracting clear resources, metadata, and rights expression from the predefined neutral formatted contents; and packaging the extracted clear resources, metadata, and rights expression into the given DRM formatted contents, wherein the given DRM formatted contents are executed by various DRM apparatuses in the given DRM domain.

A sixth aspect of the present invention provides a method of exporting and importing contents, comprising the steps of unpackaging given DRM formatted contents into clear resources, metadata, and rights expression; converting each of the unpackaged clear resources, metadata, and rights expression into its own predefined neutral format, respectively; and generating neutral-formatted contents by combining the converted resources, metadata, and rights expression and adding predetermined header information thereto; transmitting the neutral-formatted contents to a different DRM domain; extracting clear resources, metadata, and rights expression from the neutral-formatted contents transmitted from a different DRM domain; and packaging the extracted clear resources, metadata, and rights expression into given DRM formatted contents.

A seventh aspect of the present invention provides a data structure of a neutral format of contents that are exchangeable between DRM apparatuses in different DRM domains. The data structure comprises header part and body part. The header part includes version of the neutral format; header length; resource encryption algorithm type and resource encryption key; type of hash algorithm applied to the header and the body part and a hash code value; and type of digital signature algorithm and a digital signature value; and the body part includes resources encrypted using the resource encryption algorithm; rights expression in its own predefined neutral format; and metadata in its own predefined neutral format.

An eighth aspect of the present invention provides system for exchanging contents between a first DRM apparatus and a second DRM apparatus, wherein each of which belongs to a different DRM domain. The first DRM apparatus includes unpackaging means for unpackaging first DRM formatted contents into clear resources, metadata, and rights expression; converting means for converting each of the clear resources, metadata, and rights expression into a corresponding neutral format, respectively; generating means for generating neutral formatted contents by combining the converted resources, metadata, and rights expression and adding predetermined header information thereto; and transmitting means for transmitting the neutral-formatted contents to said second DRM apparatus. The second DRM apparatus includes extracting means for extracting clear resources, metadata, and rights expression from the neutral-formatted contents transmitted from said first DRM apparatus; and packaging means for packaging the extracted clear resources, metadata, and rights expression into second DRM formatted contents.

### Brief Description of the Drawings

The above and other features and advantages of the present invention will become more apparent to those of ordinary skill in the art by describing in detail preferred embodiments thereof with reference to the attached drawings in which:
FIG. 1 is a diagram illustrating a process for exchanging contents between different DRM clients according to the present invention.
FIG. 2 is a diagram illustrating the adaptation process according to an exemplary embodiment of the present invention;
FIG. 3 shows a data structure of the contents in a neutral format according to an exemplary embodiment of the present invention;
FIG. 4 shows main components of a source DRM client (DRM A) and a target DRM client (DRM B) for exporting/importing contents according to an exemplary embodiment of the present invention;
FIG. 5 is a diagram illustrating an export/import software authentication process according to an exemplary embodiment of the present invention;
FIG. 6 is a diagram illustrating a key exchange process between the source export/ import module and the target export/import module according to an exemplary embodiment of the present invention;
FIG. 7 is a diagram illustrating a device authentication process according to an exemplary embodiment of the present invention; and
FIG. 8 shows a diagram that more specifically illustrates the export/import process between the different DRM clients according to an exemplary embodiment of the present invention.

### DETAILED DESCRIPTION OF THE PREFERRED EMBODIMENTS

Before describing the present invention in detail, some terms used in this specification will be defined.
"DRM" stands for digital rights management.
"Clear resources" represent the information that can be rendered in a form that is meaningful to users, such as mp3 files.
"Packaging" refers to an operation for producing contents in which clear resources, metadata and rights expression are combined. Software for performing packaging is called a "packager."
"Unpackaging" refers to an operating for extracting clear resources, metadata and rights expression from the contents. Software for performing unpackaging is called an "Unpackager."
"PAV" stands for portable audio video device. PAVs are used for reproducing/ executing audio and/or video contents.

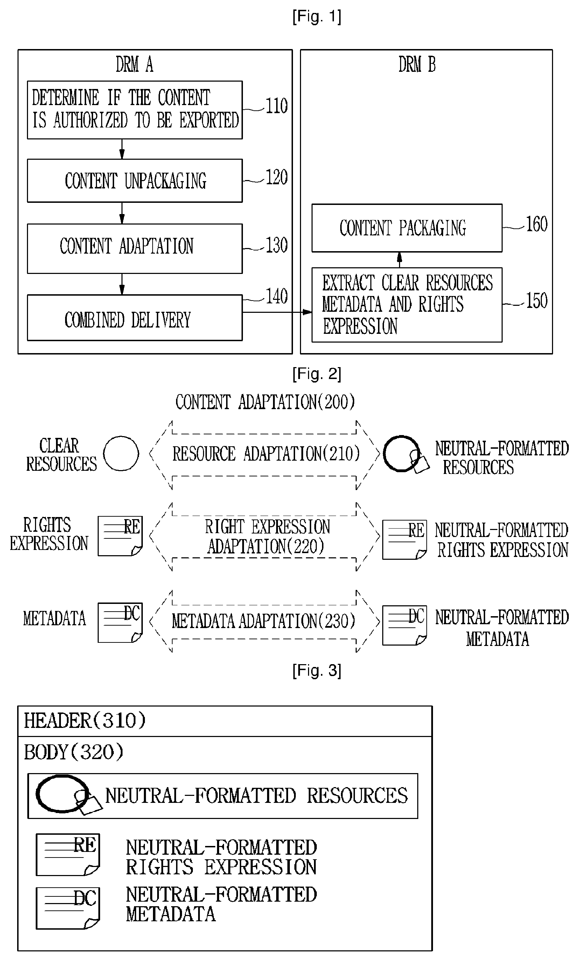

FIG. 1 is a diagram illustrating a process for exchanging contents between different DRM clients according to the present invention. It is assumed that the DRM A client desires to export (transmit) contents and the DRM B client desires to import (receive) it. As shown in FIG. 1, in step 110, it is checked if the contents have authorization to be exported, by referring to the rights expression contained in the contents.

If the contents have been determined to have authorization to be exported, it is then unpackaged into the clear resources, the metadata, and the rights expression in step 120. The unpackaged clear resources, metadata, and rights expression are respectively converted into each predefined neutral format in step 130. This work is called "content adaptation" in this specification. The content adaptation will be explained in detail later with reference to FIG. 2.

In step 140, the resources, the metadata, and the rights expression in their own neutral format are then combined and the header part for additional information is added thereto, so that the neutral formatted-contents are produced and then encrypted. The neutral formatted-contents are transmitted to the DRM B client. This work is called "combined delivery" in this specification. In combined delivery, there are one header and one body including the neutral-formatted resources, metadata and rights expression. The header includes the locations of the body items so that they can be extracted separately. Hash code value is evaluated based on the header and body, except for a hash code value itself, and the digital signature.

In order to accomplish secure contents transfer between the different DRM domains, the neutral-formatted contents are encrypted using, for example, a public key infrastructure (PKI) mechanism or a key sharing mechanism. A basic algorithm necessary to encrypt the contents may include an asymmetric encryption algorithm for secure key transfer and integrity check (e.g., RSA), a resource encryption algorithm (e.g., AES-128), and a hash algorithm (e.g., SHA-1). It is noted that such encryption algorithms are exemplary, and the different algorithms can be selected with the negotiation between source and target DRM clients. In one embodiment, the selected algorithms may be specified in the header part or is reported to the target client through message exchange between the source and target clients.

The DRM B client, which desires to import the neutral-formatted contents, receives and unpackages it into the clear resources, the metadata, and the rights expression (step 150). The extracted clear resources, metadata and rights expression are then re-packaged for adaptation to the DRM B client (step 160). Accordingly, the re-packaged contents can be executed or reproduced by DRM B format devices.

FIG. 2 is a diagram illustrating the adaptation process according to an exemplary embodiment of the present invention. As shown in FIG. 2, the adaptation process 200 for producing the neutral-formatted contents may include a resource adaptation process 210, a rights expression adaptation process 220, and a metadata adaptation process 23 0. For each adaptation according to the present invention, the corresponding neutral format is defined. It should be guaranteed that the adaptation process 200 takes place in a trusted environment.

The resource adaptation process 210 is the process in which the clear resources received from the source DRM client is converted into predefined neutral-formatted resources, which are not dependent on the specific DRM format devices. The resource adaptation process 210 randomly generates a content encryption key (CEK) to encrypt the clear resources using an encryption algorithm such as AES-128. The key used for encryption may be inserted into the rights expression in the neutral-formatted contents. Hash is evaluated based on both a header and a body, excluding the hash code and the digital signature, and written in the hash code field of the header part. The hash code information is digitally signed using a private key and saved in the digital signature field.

The rights expression adaptation process 220 converts the given rights expression into the corresponding predefined neutral format. In this embodiment, MPEG-21 rights expression language (REL) is used as the neutral format of rights expression. The neutral rights expression can be added or missed depending on the policy or right existence of a source DRM domain and a target DRM domain.

The metadata adaptation process 230 converts the given metadata into the corresponding predefined neutral format. In this embodiment, Dublin Core may be used as the neutral format of metadata. Alternatively, metadata not included in Dublin Core can also be specified in extended XML format with Dublin Core expression. The metadata in extended XML can be recognized by the specific DRM client. The neutral metadata can be added or missed depending on the policy or metadata existence of source DRM domain and target DRM domain.

FIG. 3 shows a data structure of the contents in a neutral format according to an exemplary embodiment of the present invention. As shown in FIG. 3, the data structure of the contents in the neutral format can be adapted to be exchanged between different DRM domains. The data structure of the contents may be composed of a header part 310 and a body part 320. In the header part 310, neutral format version, header length, hash code value calculated based on the header 310 and body 320, resource (or contents) encryption key, a type of encryption algorithm used for encryption of the resources, a digital signature, locations of body items (i.e., resources, rights expression, and metadata), etc. For example, AES-128 may be used as a resource encryption algorithm, and SHA-1 may be used as a hash algorithm for producing the hash code value. However, the fields in the header 310 are not limited to such fields, and some of them may be changed or new fields may be added thereto according to agreement between the DRM format devices.

The body 320 contains the encrypted resources in its own neutral format, the rights expression in its own neutral format, and the metadata in its own neutral format, which have been produced via the content adaptation process 200. In one embodiment, the predefined neutral format of the rights expression may be the MPEG-21 REL, and the predefined neutral format of the metadata may be the Dublin Core metatag.

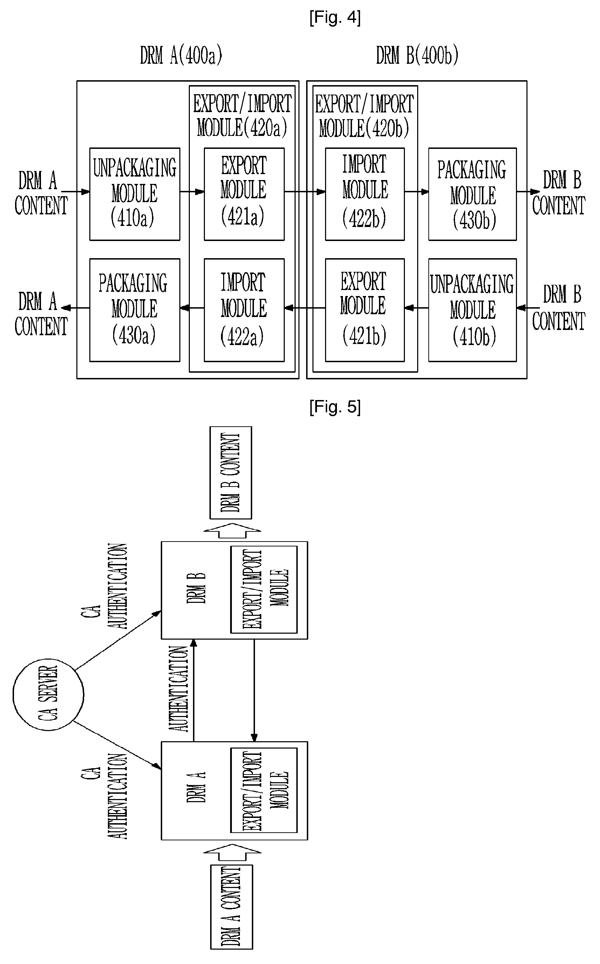

FIG. 4 shows main components of a source DRM client (DRM A) and a target DRM client (DRM B) for exporting/importing contents according to an exemplary embodiment of the present invention. As shown in FIG. 4, the DRM A and DRM B clients 400a and 400b may be data processing system which can produce, manage, export, import and/or execute contents in corresponding formats. For example, the DRM A and DRM B clients may include a PC, a PDA, a cellular phone, etc.

The DRM A client 400a includes an unpackaging module 410a for unpackaging DRM A formatted contents into the clear resources, the rights expression and the metadata; an export/import module 420a for exporting/importing the contents from/to a different DRM client (for example, DRM B client 400b); and a packaging module 430a for packaging the clear resources, the metadata, and the rights expression into the DRM A-formatted contents. In one embodiment, the unpackaging module 410a checks whether or not the DRM A formatted contents have authorization to be exported to the different DRM client, such as DRM B client, and then unpackages only the contents authorized to be exported.

Specifically, the export/import module 420a may include an export submodule 421a and an import submodule 422a. The export submodule 421a packages the clear resources, the metadata, and the rights expression, which have been extracted from the DRM A-formatted contents by the unpackaging module 410a, into the neutral-formatted contents and transmit (or export) it to the target DRM client, i.e., the DRM B client 400b. The import submodule 422a receives (imports) the neutral-formatted contents from the DRM B client and then extracts from it the clear resources, the metadata, and the rights expression. In addition, the export submodule 421a may perfo rm authentication for the target DRM client. Also, in order to safely export the contents, it may authenticate the export/import module at the target DRM client.

The packaging module 430a serves to package the clear resources, the metadata, and the rights expression extracted by the import module 422a into the DRM A-formatted contents.

The DRM B client 400b has substantially the same configuration as the DRM A client 400a, and thus the description thereof is omitted. The drawings are intended to help the understanding of the export/import concept according to the present invention and should not be construed as limiting the physical configuration of the present invention. For example, FIG. 4 shows that the export/import modules 420a and 420b are installed on the DRM A client 400a and the DRM B client 400b, respectively, but the export/import modules could be implemented as an independent device (e.g., export/import server), separate from the DRM clients. In addition, although FIG. 4 shows that contents are exchanged between two different DRM clients, it could be easily understood that the contents may be exchanged among a plurality of different DRM clients, by using the data structure of the neutral format.

FIG. 5 is a diagram illustrating an export/import software authentication process according to an exemplary embodiment of the present invention. The source export/ import software and the target export/import software, which are separately installed in the different DRM clients, authenticate each other for the security purpose, before exchanging the key or communicating each other. Also, it should be confirmed whether both of them are tampered or not. As shown in FIG. 5, the authentication between the export/import software may be performed using a certificate authority (CA) server.

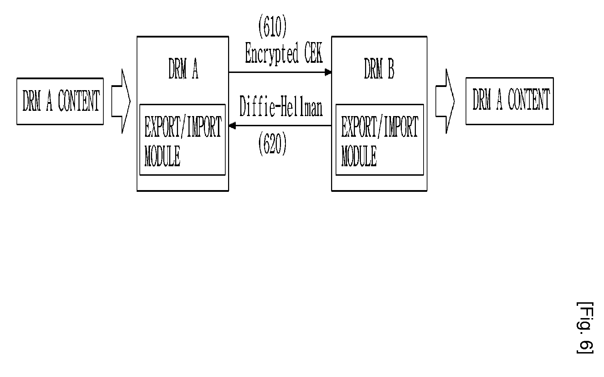

FIG. 6 is a diagram illustrating a key exchange process between the source export/ import module and the target export/import module according to an exemplary embodiment of the present invention. When they send and receive messages, the messages should be encrypted for secure transfer against eavesdrops or attacks. Please note that the authentication of the source/target software and devices should be done in advance.

Since the exchange of a content encryption key (CEK) in clear text format between the two modules is not safe, the following two ways may be considered: certificate-based CEK 610 exchange and shared key mechanism for producing the same key at both sides, without exchanging a key, such as Diffie-Hellman algorithm.

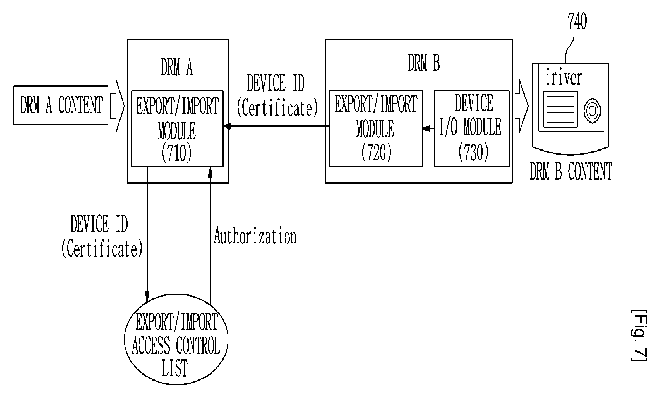

FIG. 7 is a diagram illustrating a device authentication process according to an exemplary embodiment of the present invention. Device authentication is to check the target PAV device has been authorized to execute the imported contents. In this embodiment, device authentication is performed based on the export/import access control list. Since the export/import process is to exchange contents over different DRM domains, the process should be under the control depending on business policies and/or technical requirements. In one embodiment, the (source) export/import module 710 of DRM A client first requests from the (target) export/import module 720 for a device certificate of the DRM B format device 740 connected to a device I/O module 730. Assume that the device certificate has been inserted into the device. The (target) export/import module 720 then transmits the device certificate (or identifier) of the DRM B format device 740 to the (source) export/import module 710. The (source) export/import module 710 authenticates the device by checking the device certificate with the export/import access control list. In other embodiment, instead of a device certificate, a device identifier, which has been assigned by a device-identifying server (not shown), may be used to perform device authentication.

In the export/import access control list, for each of access control items, it is listed if it is permitted to be exported/imported. The access control items may include devices with different vendors, models, or versions and/or DRM software with different vendors, models, or versions. The export/import access control list may be downloaded from a related server and updated periodically or non-periodically. Alternatively, the export/import module may access the related server to access the list during the device authentication process.

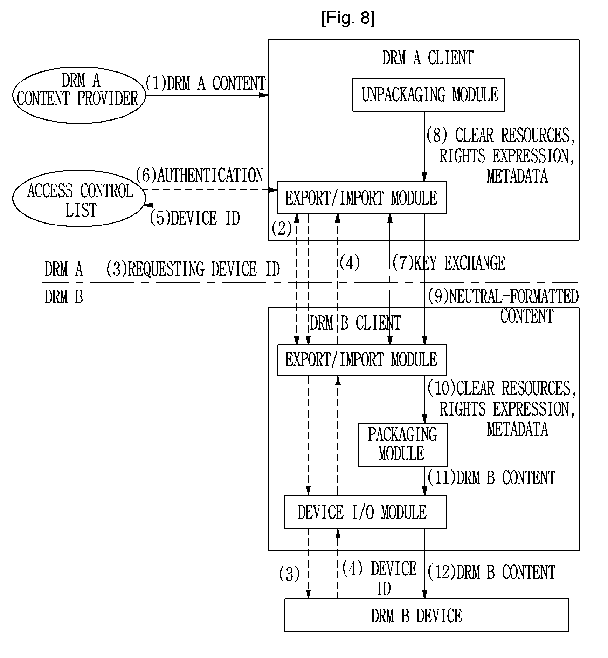

FIG. 8 shows a diagram that more specifically illustrates the export/import process between the different DRM clients according to an exemplary embodiment of the present invention. For convenience, it is assumed the contents are exported from the (source) DRM A client 400a to the (target) DRM B client 400b.

### Content purchase: (1)

(1) The DRM A client 400a purchases and downloads DRM A-formatted contents from a DRM content provider (server). In this embodiment, before exporting the downloaded DRM A-formatted contents, the (source) DRM A client checks whether it is authorized to be exported, based on the rights expression in the contents.

### Software authentication: (2)

(2) For the sake of safe content exchange, authentication is performed between the source export/import module 420a of the DRM A client and the target export/import module 420b of the DRM B client.

### Device authentication: (3) ∼ (6)

(3) The source export/import module requires the device ID of the DRM B format device connected to the DRM B client, via the target export/import module 420b.
(4) The target export/import module 420b then sends the device ID to the source export/import module 420a.
(5)-(6) The source export/import module 420a authenticates the DRM B format device based on the export/import access control list.
Key exchange between export/import modules: (7)
(7) For security, the key may be exchanged between the source and target export/ import modules 420a and 420b.

### Export/Import: (8) ∼ (12)

(8) The unpackaging module 410a of the DRM A client unpackages the DRM A-formatted contents into the clear resources, metadata, and rights expression and then sends them to the source export/import module 420a.
(9) The source export/import module 420a packages the clear resources, metadata and right expression into the neutral format, via the adaptation process, and sends it to the target export/import module 420b.
(10) The target export/import module 420b receives the neutral-formatted contents and extracts the resources, the metadata, and the rights expression from it. It then sends the results to the packaging module 430b.
(11) The packaging module 430b packages then into the DRM B formatted contents, which is executable by the DRM B format device, and sends it to the device I/O module.
(12) The device I/O module transmits it to the DRM B format device.

The present invention can be provided in the form of computer code stored on computer-readable recording media such as floppy disks, hard disks, CD ROMs, flash memory cards, PROM RAM, ROM, and magnetic tape, which can be implemented on one or more different types of products. The computer code may be written in a programming language such as C, C++, or JAVA.

As described above, the present invention provides the content structure having the neutral format for content exchange between the different DRM format devices and the export/import method and device using the same. According to the present invention, by exchanging the contents of the different DRM formats, use of various contents can be supported to thereby satisfy demands of users, convenience of users is increased, and practical use of the contents is also increased.

Although exemplary embodiments of the present invention have been described with reference to the attached drawings, the present invention is not limited to these embodiments, and it should be appreciated to those skilled in the art that a variety of modifications and changes can be made without departing from the spirit and scope of the present invention.

## Claims

1. An apparatus for exporting given DRM formatted contents to a target DRM apparatus with a different DRM format, the apparatus comprising:
means for unpackaging the given DRM formatted contents into clear resources, metadata, and rights expression; and
means for converting each of the unpackaged clear resources, metadata, and
rights expression into a predefined neutral format, respectively; and
means for generating neutral-formatted contents by combining the converted resources, metadata, and rights expression and adding predetermined header information thereto;
means for transmitting the neutral-formatted contents to the target DRM apparatus;
means for authenticating a device that is connected to the target DRM apparatus to check if the device has been authorized to execute the contents, the authenticating being based on an export/import access control list, listing if the apparatus is permitted to export the given DRM formatted contents to the device; and
means for performing authentication between an export software of the apparatus and an import software of the target DRM apparatus by a certificate authority server.

2. The apparatus of claim 1, further comprising means for determining whether the given DRM formatted contents are authorized to be exported or not.

3. The apparatus of claim 1, wherein said converting means includes means for encrypting the resources using a predetermined encryption algorithm and inserting a resource encryption key into the predefined neutral-formatted rights expression.

4. The apparatus of claim 3, wherein the predetermined resources encryption algorithm includes AES- 128.

5. The apparatus of claim 1, wherein the predefined neutral format of the rights expression is MPEG-21 REL.

6. The apparatus of claim 1, wherein the predefined neutral format of the metadata is Dublin Core format.

7. The apparatus of claim 1, wherein the metadata not included in the predefined neutral format is specified in extended XML format with Dublin Core format.

8. The apparatus of claim 1, further comprising encryption means for encrypting the neutral-formatted contents.

9. The apparatus of claim 8, wherein said encryption means encrypts the neutral-formatted contents using a public key infrastructure (PKI) encryption algorithm.

10. The apparatus of claim 9, wherein said encryption means evaluates a hash code value on the neutral-formatted contents, records the hash code value in a hash code field of the header, digitally signs the hash code value using a private key, and records the digitally signed hash code value in a digital signature field of the header.

11. The apparatus of claim 9, further comprising means for transmitting a resource encryption key encrypted by using the public key of the target apparatus to the target DRM apparatus.

12. The apparatus of claim 7, wherein said encryption means encrypts the neutral-formatted contents based on a shared key encryption algorithm.

13. The apparatus of claim 1, wherein said device authentication means authenticates the device by checking a device certificate, which has been inserted into the device, with an export/import control list provided by a related server.

14. The apparatus of claim 1, wherein said device authentication means authenticates the device by checking a device identifier, which has been assigned to the device by a device identifying server, with an export/import control list provided by a related server.

17. A method for exporting given DRM formatted contents to a target DRM apparatus with a different DRM format, the method comprising the steps of:
unpackaging the given DRM formatted contents into clear resources, metadata, and rights expression;
converting each of the unpackaged clear resources, metadata, and rights expression into a predefined neutral format, respectively; and
generating neutral-formatted contents by combining the converted resources, metadata, and rights expression and adding predetermined header information thereto; and
transmitting the neutral-formatted contents to the target DRM apparatus;
authenticating a device that is connected to the target DRM apparatus to check if the device has been authorized to execute the contents, the authenticating being based on an export/import access control list, listing if the apparatus is permitted to export the given DRM formatted contents to the device; and
performing authentication between an export software of the apparatus and an import software of the target DRM apparatus by a certificate authority server.

18. The method of claim 17, further comprising the step of determining whether the given DRM formatted contents are authorized to be exported or not.

19. The method of claim 17, wherein said converting step includes the step of encrypting the resources using a predetermined encryption algorithm and inserting an encryption key into the predefined neutral-formatted rights expression.

21. The apparatus or method according to any of the preceding claims, wherein the predetermined neutral format of contents that are exchangeable between DRM apparatuses in different DRM domains includes a data structure comprising header part and body part, the header part including:
version of the neutral format;
header length;
resource encryption algorithm type and a resource encryption key;
type of hash algorithm applied to the header part and the body part and a hash code value; and
a type of digital signature algorithm and a digital signature value; and
the body part including:
resources encrypted using the resource encryption algorithm;
rights expression in its own predefined neutral format; and
metadata in its own predefined neutral format.

## Patentansprüche

1. Apparat zum Exportieren von gegebenen DRM-formatierten Inhalten an einen Ziel-DRM-Apparat mit einem unterschiedlichen DRM-format, wobei der Apparat umfasst:
Mittel zum Entpacken der gegebenen DRM-formatierten Inhalte in klare Ressourcen, Metadaten und Rechte-Ausdruck; und
Mittel zum Konvertieren von jedem der entpackten klaren Ressourcen, Metadaten, bzw. einen Rechte-Ausdruck in ein vordefiniertes neutrales Format; und
Mittel zum Generieren von neutral-formatierten Inhalten durch Kombinieren der konvertierten Ressourcen, Metadaten und Rechte-Ausdruck und dazu Hinzufügen von vorbestimmter Kopfinformation;
Mittel zum Übertragen der neutral-formatierten Inhalte an den Ziel-DRM-Apparat;
Mittel zum Authentifizieren einer Vorrichtung, die mit dem Ziel-DRM-Apparat verbunden ist, um zu prüfen, ob die Vorrichtung autorisiert wurde, die Inhalte auszuführen, wobei das Authentifizieren auf einer Export/Import-Zugriffsteuerliste basiert, die aufführt, ob der Apparat zugelassen ist, die gegebenen DRM-formatierten Inhalte an die Vorrichtung zu exportieren; und
Mittel zum Ausführen von Authentifizierung zwischen einer Export-Software des Apparats und einer Import-Software des Ziel-DRM-Apparats durch einen Zertifizierungsstellenserver.

2. Apparat nach Anspruch 1, ferner umfassend Mittel zum Bestimmen, ob die gegebenen DRM-formatierten Inhalte autorisiert sind exportiert zu werden oder nicht.

3. Apparat nach Anspruch 1, wobei das Mittel zum Konvertieren Mittel zum Verschlüsseln der Ressourcen unter Verwendung eines vorbestimmten Verschlüsselungsalgorithmus und Einfügen eines Ressourcenverschlüsselungsschlüssels in den vordefinierten neutral-formatierten Rechte-Ausdruck enthält.

4. Apparat nach Anspruch 3, wobei der vorbestimmte Ressourcen-Verschlüsselungsalgorithmus AES-128 enthält.

5. Apparat nach Anspruch 1, wobei das vordefinierte neutrale Format des Rechte-Ausdrucks MPEG-21 REL ist.

6. Apparat nach Anspruch 1, wobei das vordefinierte neutrale Format der Metadaten das Dublin Core Format ist.

7. Apparat nach Anspruch 1, wobei die Metadaten, die nicht in dem vordefinierten neutralen Format enthalten sind, in erweitertem XML Format mit Dublin Core Format spezifiziert sind.

8. Apparat nach Anspruch 1, ferner umfassend einen Verschlüsselungsmittel zum Verschlüsseln der neutral-formatierten Inhalte.

9. Apparat nach Anspruch 8, wobei das Verschlüsselungsmittel den neutral-formatierten Inhalten unter Verwendung eines Public-Key-Infrastruktur (PKI) Verschlüsselungsalgorithmus verschlüsselt.

10. Apparat nach Anspruch 9, wobei das Verschlüsselungsmittel einen Hashcodewert auf den neutral-formatierten Inhalten auswertet, den Hashcodewert in einem Hashcodefeld des Kopfs aufzeichnet, den Hashcodewert unter Verwendung eines privaten Schlüssels digital signiert, und den digital signierten Hashcodewert in einem digitalen Signaturfeld des Kopfs aufzeichnet.

11. Apparat nach Anspruch 9, ferner umfassend Mittel zum Übermitteln eines Ressourcenverschlüsselungsschlüssels, der unter Verwendung des öffentlichen Schlüssels des Ziel-DRM-Apparats verschlüsselt ist.

12. Apparat nach Anspruch 7, wobei das Verschlüsselungsmittel die neutral-formatierten Inhalte basierend auf einem Verschlüsselungsalgorithmus mit gemeinsamem Schlüssel verschlüsselt.

13. Apparat nach Anspruch 1, wobei das
Vorrichtungsauthentifizierungsmittel die Vorrichtung durch Prüfen eines Vorrichtungszertifikats, welches in die Vorrichtung eingeführt wurde, mit einer Import/Export-Steuerliste, die von einem diesbezüglichen Server bereitgestellt wird, authentifiziert.

14. Apparat nach Anspruch 1, wobei das
Vorrichtungsauthentifizierungsmittel die Vorrichtung durch Prüfen eines Vorrichtungsidentifikators, welcher der Vorrichtung durch einen Vorrichtung-Identifizierenden Server zugewiesen wurde, mit einer Import/Export-Steuerliste, die von einem diesbezüglichen Server bereitgestellt wird, authentifiziert.

15. Verfahren zum Exportieren gegebener DRM-formatierter Inhalte an einen Ziel-DRM-Apparat mit einem unterschiedlichen DRM-format, wobei das Verfahren die Schritte umfasst:
Entpacken der gegebenen DRM-formatierten Inhalte in klare Ressourcen, Metadaten und Rechte-Ausdruck;
Konvertieren von jedem der entpackten klaren Ressourcen, Metadaten bzw. Rechte-Ausdruck in ein vordefiniertes neutrales Format; und
Generieren von neutral-formatierten Inhalten durch Kombinieren der konvertierten Ressourcen, Metadaten und Rechte-Ausdruck und dazu Hinzufügen von vorbestimmter Kopfinformation;
Übertragen der neutral-formatierten Inhalte an den Ziel-DRM-Apparat;
Authentifizieren einer Vorrichtung, die mit dem Ziel-DRM-Apparat verbunden ist, um zu prüfen, ob die Vorrichtung autorisiert wurde, die Inhalte auszuführen, wobei das Authentifizieren auf einer Export/Import-Zugriffsteuerliste basiert, die aufführt, ob der Apparat zugelassen ist, die gegebenen DRM-formatierten Inhalte an die Vorrichtung zu exportieren; und
Ausführen von Authentifizierung zwischen einer Export-Software des Apparats und einer Import-Software des Ziel-DRM-Apparats durch einen Zertifizierungsstellenserver.

16. Verfahren nach Anspruch 17 ferner umfassend den Schritt des Bestimmens, ob die gegebene DRM-formatierten Inhalte autorisiert sind exportiert zu werden oder nicht.

17. Verfahren nach Anspruch 17, wobei der Konvertierungsschritt, den Schritt des Verschlüsselns der Ressourcen unter Verwendung eines vorbestimmten Verschlüsselungsalgorithmus und Einfügen eines Verschlüsselungsschlüssels in den vordefinierten neutral-formatierte Rechte-Ausdruck enthält.

18. Apparat oder Verfahren nach einem der vorhergehenden Ansprüche, wobei das vorbestimmte neutrale Format von Inhalten, die zwischen DRM Apparaten in unterschiedlichen DRM Domänen austauschbar sind, eine Datenstruktur enthält, die einen Kopfteil und einen Körperteil enthält, wobei der Kopfteil enthält:
Version des neutralen Formats;
Kopflänge;
Typ des Ressourcenverschlüsselungsalgorithmus und Ressourcenverschlüsselungsschlüssel;
Typ des Hashalgorithmus, der auf den Kopfteil und den Körperteil angewandt ist und einen Hashcodewert; und
einen Typ des Digitalsignaturalgorithmus und einen Digitalsignaturwert; und der Körperteil enthält:
Ressourcen, die unter Verwendung des Ressourcenverschlüsselungsalgorithmus verschlüsselt sind;
Rechte-Ausdruck in seinem eigenen vordefinierten neutralen Format; und
Metadaten in ihrem eigenen vordefinierten neutralen Format.

## Revendications

1. Appareil pour exporter des contenus formatés DRM donnés vers un appareil DRM cible avec un format DRM différent, l'appareil comprenant :
des moyens pour désemballer les contenus formatés DRM donnés en ressources, métadonnées, et expression de droits en clair ; et
des moyens pour convertir chacune des ressources, métadonnées, et expression de droits en clair désemballées en un format neutre prédéfini, respectivement ; et
des moyens pour générer des contenus formatés-neutres en combinant les ressources, métadonnées, et expression de droits converties et y ajouter des informations d'en-tête prédéterminées ;
des moyens pour transmettre les contenus formatés-neutres à l'appareil DRM cible ;
des moyens pour authentifier un dispositif qui est connecté à l'appareil DRM cible pour vérifier si le dispositif a été autorisé à exécuter les contenus, l'authentification étant basée sur une lise de contrôle d'accès d'export/import, listant si l'appareil a la permission d'exporter les contenus formatés DRM donnés vers le dispositif ; et
des moyens pour effectuer une authentification entre un logiciel d'export de l'appareil et un logiciel d'import de l'appareil DRM cible par un serveur d'autorité de certification.

2. Appareil selon la revendication 1, comprenant en outre des moyens pour déterminer si les contenus formatés DRM donnés sont autorisés à être exportés ou non.

3. Appareil selon la revendication 1, dans lequel lesdits moyens de conversion incluent des moyens pour chiffrer les ressources en utilisant un algorithme de chiffrement prédéterminé et insérer une clé de chiffrement de ressource dans l'expression de droits formatée-neutre prédéfinie.

4. Appareil selon la revendication 3, dans lequel l'algorithme de chiffrement de ressources prédéterminé inclut AES-128.

5. Appareil selon la revendication 1, dans lequel le format neutre prédéfini de l'expression de droits est MPEG-21 REL.

6. Appareil selon la revendication 1, dans lequel le format neutre prédéfini des métadonnées est le format Dublin Core.

7. Appareil selon la revendication 1, dans lequel les métadonnées non incluses dans le format neutre prédéfini sont spécifiées au format XML étendu avec le format Dublin Core.

8. Appareil selon la revendication 1, comprenant en outre des moyens de chiffrement pour chiffrer les contenus formatés-neutres.

9. Appareil selon la revendication 8, dans lequel lesdits moyens de chiffrement chiffrent les contenus formatés-neutres en utilisant un algorithme de chiffrement d'infrastructure à clé publique (PKI).

10. Appareil selon la revendication 9, dans lequel lesdits moyens de chiffrement évaluent une valeur de code de hachage sur les contenus formatés-neutres, enregistrent la valeur de code de hachage dans un champ de code de hachage de l'en-tête, signent numériquement la valeur de code de hachage en utilisant une clé privée, et enregistrent la valeur de code de hachage signée numériquement dans un champ de signature numérique de l'en-tête.

11. Appareil selon la revendication 9, comprenant en outre des moyens pour transmettre une clé de chiffrement de ressource chiffrée en utilisant la clé publique de l'appareil cible à l'appareil DRM cible.

12. Appareil selon la revendication 7, dans lequel lesdits moyens de chiffrement chiffrent les contenus formatés-neutres sur la base d'un algorithme de chiffrement à clé partagée.

13. Appareil selon la revendication 1, dans lequel lesdits moyens d'authentification de dispositif authentifient le dispositif en vérifiant un certificat de dispositif, qui a été inséré dans le dispositif, avec une liste de contrôle d'export/import fournie par un serveur connexe.

14. Appareil selon la revendication 1, dans lequel lesdits moyens d'authentification de dispositif authentifient le dispositif en vérifiant un identificateur de dispositif, qui a été assigné au dispositif par un serveur d'identification de dispositif, avec une liste de contrôle d'export/import fournie par un serveur connexe.

15. Procédé pour exporter des contenus formatés DRM donnés vers un appareil DRM cible avec un format DRM différent, le procédé comprenant les étapes consistant à :
désemballer les contenus formatés DRM donnés en ressources, métadonnées, et expression de droits en clair ;
convertir chacune des ressources, métadonnées, et expression de droits en clair désemballées en un format neutre prédéfini, respectivement ; et
générer des contenus formatés-neutres en combinant les ressources, métadonnées, et expression de droits converties et y ajouter des informations d'en-tête prédéterminées ; et
transmettre les contenus formatés-neutres à l'appareil DRM cible ;
authentifier un dispositif qui est connecté à l'appareil DRM cible pour vérifier si le dispositif a été autorisé à exécuter les contenus, l'authentification étant basée sur une lise de contrôle d'accès d'export/import, listant si l'appareil a la permission d'exporter les contenus formatés DRM donnés vers le dispositif ; et
effectuer une authentification entre un logiciel d'export de l'appareil et un logiciel d'import de l'appareil DRM cible par un serveur d'autorité de certification.

16. Procédé selon la revendication 15, comprenant en outre l'étape consistant à déterminer si les contenus formatés DRM donnés sont autorisés à être exportés ou non.

17. Procédé selon la revendication 15, dans lequel ladite étape de conversion inclut l'étape consistant à chiffrer les ressources en utilisant un algorithme de chiffrement prédéterminé et insérer une clé de chiffrement dans l'expression de droits formatée-neutre prédéfinie.

18. Appareil ou procédé selon l'une quelconque des revendications précédentes, dans lequel le format neutre prédéterminé de contenus qui sont échangeables entre des appareils DRM dans des domaines DRM différents inclut une structure de données comprenant une partie d'en-tête et une partie de corps, la partie d'en-tête incluant :
version du format neutre ;
longueur d'en-tête ;
type d'algorithme de chiffrement de ressource et une clé de chiffrement de ressource ;
type d'algorithme de hachage appliqué à la partie d'en-tête et à la partie de corps et une valeur de code de hachage ; et
un type d'algorithme de signature numérique et une valeur de signature numérique ; et
la partie de corps incluant :
ressources chiffrées en utilisant l'algorithme de chiffrement de ressource ;
expression de droits dans son propre format neutre prédéfini ; et
métadonnées dans leur propre format neutre prédéfini.
